# EUROPEAN PATENT SPECIFICATION

(11) **EP 3 160 772 B1**
(45) Date of publication and mention of the grant of the patent: **27.03.2019**
(21) Application number: 14744693.4
(22) Date of filing: 30.06.2014
(51) Int. Cl.: B60C 11/12

(54) **VARIABLE-WIDTH SIPE FOR TIRE TREAD AND TIRE**
LAMELLE MIT VARIABLER BREITE FÜR REIFENLAUFFLÄCHE UND REIFEN
LAMELLE DE LARGEUR VARIABLE POUR UNE BANDE DE ROULEMENT DE PNEU, ET PNEU

(43) Date of publication of application: 03.05.2017
(73) Proprietor: Compagnie Générale des Etablissements Michelin, 63000 Clermont-Ferrand (FR)
(72) Inventor: CHRISTENBURY, Damon Lee, Fountain Inn, South Carolina 29644 (US)
(74) Representative: Casalonga
(86) International application number: PCT/US2014/044963
(87) International publication number: WO 2016/003435

(56) References cited:
- EP-A2- 0 213 452
- WO-A1-2012/058171
- US-A1- 2011 265 926

## Description

### BACKGROUND OF THE INVENTION

### Field of the Invention

This invention relates generally to a sipe for a tire. More specifically, this invention relates to a sipe having a variable-width, and treads and tires having variable-width sipes.

### Description of the Related Art

Tire treads generally extend about the outer circumference of a tire to operate as the intermediary between the tire and a surface upon which it travels (which is also referred to herein as a "tire operating surface", which may comprise ground, for example). Contact between the tire tread and the operating surface occurs along the outer, ground-engaging side of the tread along a tire footprint of the tire (which is also referred to as a "contact patch"), which comprises a contact area between the tire tread and the operating surface. Tire treads provide grip, which resists slip that may result between the tread and the operating surface during tire acceleration, braking, and/or cornering. Tire treads may also include tread elements, such as ribs, blocks, or lugs, and tread features, such as grooves and sipes, each of which may assist in providing desired tire performance when a tire is operating under particular conditions.

Tire treads are known to include a pattern of tread features arranged along a ground-engaging side of the tread to provide sufficient traction and handling during particular conditions. For example, grooves provide void into which water, mud, or other environmental materials may be diverted to better allow the tread surface to engage a ground surface. It is also known to use sipes for the creation of edges along the ground-engaging surface of the tread, which improve traction when operating in wet, snowy, or icy conditions. Commonly, sipes are formed by molding a narrow slot or groove into the tread, which, in exemplary embodiments, have width of 0.5 mm or less. One of ordinary skill in the art would understand that a sipe is different from a groove, such as lateral or longitudinal groove. In particular, a groove has a width configured to remain open in the tire footprint for the purpose of receiving environmental materials, as described above, while sipes are configured such that opposing sides forming a width of the sipe contact, where the opposing sides are arranged in partial engagement.

It is well known that prior art sipes are designed with a cross section of constant width. Due to the kinematics of the tire and the operating surface during tire operation, there is a flattening of tire tread and its ground-engaging side (as well as a crown of the tire) when the tire tread enters the tire footprint, where the tire tread transforms from an unloaded, undeformed configuration outside the footprint to a loaded, deformed configuration when conforming to the tire operating surface in the tire footprint. This flattening of the crown results in a compressive stress/strain induced on the tire tread to alter the configurations of sipes.

When the tread is in an unloaded, undeformed configuration outside the footprint, a sipe is arranged in an open configuration. In the open configuration, the width of the sipe is generally constant along full depth of the sipe. When the tread is in a loaded, deformed configuration in the footprint, the tread generally flattens and a sipe becomes arranged in a closed configuration in the tire footprint. In the closed configuration, opposing sides of the sipe partially or unevenly engage each other. This partial or uneven engagement provides a non-uniform pressure gradient between or along each of the opposing sides, such that amount of energy is stored in the tread increases. This stored energy creates a tendency of the tire to resist rolling (also known as rolling resistance), thereby decreasing the efficiency of tire operation. Accordingly, there is a need to reduce rolling resistance using improved tread designs, by reducing the amount of energy stored in the tread as it traverses through a tire footprint.

On other hand the prior art document EP 0 213 452 A2, according to the preamble of claim 1, discloses a sipe with a cross section having a variable width, which should permit a reduction of sound energy.

### SUMMARY OF THE INVENTION

Particular embodiments of the present invention include tires and tire treads having variable-width sipes. Particular embodiments of the present invention include tire treads having a thickness extending depthwise from an outer, ground-engaging side of the tread in a direction perpendicular to a direction of a tread width and in a direction of the tread length. The treads further include a sipe (one or more, or a plurality) arranged within the tread, the sipe having a length extending in a direction transverse to the tread thickness, and a depth extending into the tread thickness in a direction away from the outer, ground-engaging side. The sipe is configured to articulate between an open configuration and a closed configuration as the tire rotates during tire operation. The sipe has a variable-width extending transverse to the sipe length and transverse to the depth in the open configuration, the variable-width being defined by a pair of opposing sipe sides. The variable-width decreases as the depth increases into the tread thickness in a direction away from the outer, ground-engaging side, whereby the opposing sipe sides are configured to substantially engage each other at substantially the same time in the closed configuration.

Further embodiments of the present invention include a tire having a tire tread with one or more variable-thickness sipes as described and contemplated herein, yet further embodiments include method for reducing rolling resistance of a tire during tire operation. Such methods include providing a tire, the tire having a tire tread with a thickness extending depthwise from an outer, ground-engaging side of the tread in a direction perpendicular to a direction of a tread width and in a direction of the tread length, the direction of the tread thickness extending in a radial direction of the tire relative a rotational axis of the tire. Such methods also include providing a sipe arranged within the tread, the sipe having a length extending in a direction transverse to the tread thickness, and a depth extending into the tread thickness in a direction away from the outer, ground-engaging side, the sipe configured to articulate between an open configuration and a closed configuration as the tire rotates during tire operation, where the sipe has a variable-width extending transverse to the sipe length and transverse to the depth in the open configuration, the variable-width being defined by a pair of opposing sipe sides, the variable-width decreasing as the depth increases into the tread thickness in a direction away from the outer, ground-engaging side. In particular embodiments of such methods also include operating the tire such that the opposing sipe sides substantially engage each other at substantially the same time in the closed configuration.

The foregoing and other objects, features and advantages of the invention will be apparent from the following more detailed descriptions of particular embodiments of the invention, as illustrated in the accompanying drawing wherein like reference numbers represent like parts of the invention.

### BRIEF DESCRIPTION OF THE DRAWINGS

FIG. **1** is a cross-sectional perspective view of a tire tread, according to an embodiment of the invention.
FIG. **2A** is a cross-sectional view of a section of a tire tread having a prior art sipe arranged in an open configuration, outside a tire footprint.
FIG. **2B** is a cross-sectional view of a section of a tire tread having the prior art sipe of FIG. **2A** showing the prior art sipe contacting in a non-uniform manner into a closed configuration within a tire footprint.
FIG. **3A** is a cross-sectional view of the section of a tire tread having a variable-width sipe in an open configuration outside a tire footprint, according to an embodiment of the invention.
FIG. **3B** is a cross-sectional view of the section of a tire tread shown in FIG. **3A****,** where the variable-width sipe is arranged in a closed configuration within a tire footprint, according to an embodiment of the invention.
FIG. **4** is a cross-sectional view of a section of a tire tread having a variable-width sipe in an open configuration, where each side extends depthwise along a curvilinear, non-linear path, in accordance with another embodiment of the invention.
FIG. **5** is a cross-sectional view of a section of a tire tread having a variable-width sipe in an open configuration, where each side extends depthwise along an undulating, non-linear path, in accordance with another embodiment of the invention.
FIG. **6** is a cross-sectional view of a tire mold including a sipe-forming element, in accordance with an embodiment of the invention.
FIG. **7** is a perspective view of a variable-width sipe-forming element configured to form a corresponding variable-width sipe in a molding operation, in accordance with an embodiment of the invention.
FIG. **8** is a side view of the variable-width sipe-forming element of FIG. **7****.**
FIG. **9** is a perspective view of a variable-width sipe-forming element, in accordance with an embodiment of the invention, having a plurality of strengthening members or ribs extending in a direction of a height of the sipe-forming element.
FIG. **10** is a side view of the variable-width sipe-forming element of FIG. **9****.**
FIG. **11** is a perspective view of a variable-width sipe shown in an open configuration, where the length of the sipe and the depth of the sipe each extend along an separate undulating, non-linear path, in accordance with another embodiment of the invention.

### DETAILED DESCRIPTION OF PARTICULAR EMBODIMENTS

Various embodiments of the invention described herein provide a tire tread characterized as providing a reduction in rolling resistance. Rolling resistance connotes a tire's ability to resist its continued rotation. Commonly, rolling resistance arises due to hysteresis losses, which occur through the use of elastomeric materials and due to the ongoing deformation of the tire.

As noted above, when the tread enters a tire footprint, there is a flattening of the tread or tread crown. As such, when a tire rolls, a portion of the tread rolls into contact with the tire operating surface, where a portion of the tread rolls into and enters the footprint. Concurrently, another portion of the tread rolls out of contact with the tire operating surface, where a portion of the tread rolls out of and exits the footprint. Due to the flattening of the tire tread or tread crown, compressive stresses and strains are imparted upon the local tire tread, whereby a sipe transforms from an open arrangement to a closed arrangement due to the kinematics of the tire operation to the local tire tread. As a result, a prior art sipe having a constant width in the direction of the sipe depth (also referred to as the sipe "height") only partially closes, where opposing sides of the sipe only partially engage in the closed arrangement. In other words, the opposing sipe sides do not substantially engage each other along the substantial depth of the sipe.

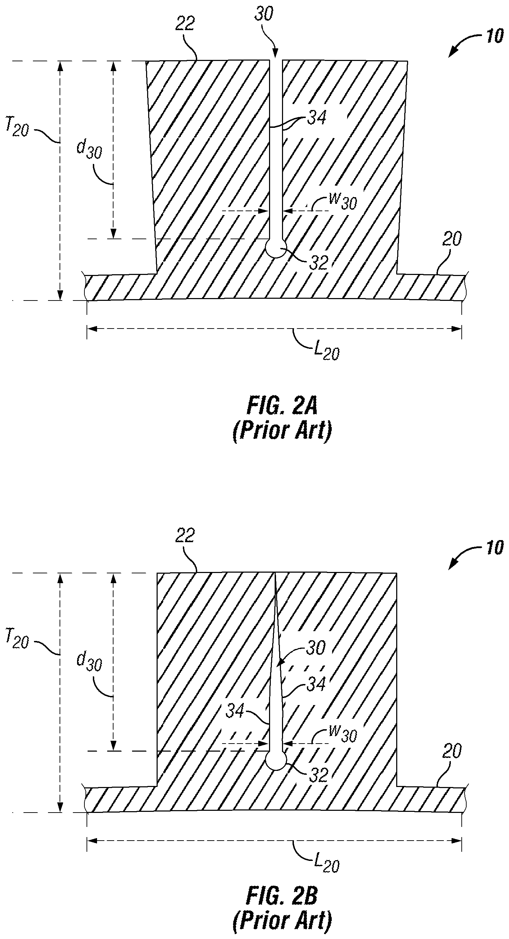

By example, FIG. **2A** displays a prior art sipe **30** in a tread **20** of a tire **10** in the inflated, unloaded shape, where the prior art sipe **30** is arranged in an open configuration having a sipe width **w₃₀**. In the open configuration, the width **w₃₀** of the sipe **30** is generally constant as the sipe depth or height **d₃₀** increases into the tread thickness **T₂₀** from a ground-engaging side **22** of the tread **20.** It is noted that opposing sipe sides **34** are spaced apart to define the width or thickness **w₃₀** of the sipe **30,** that is, a width or thickness of the void formed by the sipe **30.** FIG. **2B** shows the sipe of FIG. **2A** in the flattened, loaded configuration, where opposing sipe sides **34** of the prior art sipe **30** non-uniformly engage each other when being configured into a closed configuration, such as in the tire footprint. In the closed configuration, opposing sides **34** of the sipe **30** non-uniformly engage each other, and may only partially engage each other. By virtue of the opposing sipe sides **34** non-uniformly or partially engaging each other in the closed arrangement, the prior art sipe **30,** which is characterized as having a substantially constant thickness in a direction of the sipe depth, creates an uneven or non-uniform pressurized engagement between the opposing sipe sides **34.** This in turn results in a significant pressure gradient along each of the opposing sipe sides **34,** in a direction of the tread thickness **T₂₀** (that is, in a radial direction relative the rotational axis of the tire). This non-uniform pressure facilitates the storage of energy stored within the tread **20** as the tread traverses the contact patch, which in turn negatively impacts the rolling resistance performance of the tire (which is referred to herein as an increase in rolling resistance).

As one manner for reducing the amount of energy stored in a tire tread and therefore improving rolling resistance performance by reducing rolling resistance, the invention includes treads having a variable-width sipe configured such that opposing sides substantially engage each other along a substantial height of the sipe at substantially the same time in the closed configuration. In other words, opposing sides of the sipe contact each other at the substantially the same time when the sipe transitions from an open configuration to a closed configuration. By doing so, deformation of the tread local to the sipe is reduced, and a more uniform distribution of pressure obtained between and along the opposing sides of the sipe, in a direction of the tread thickness.

Accordingly, particular embodiments of the invention include methods for reducing rolling resistance of a tire during tire operation. In such methods, one step includes providing a tire having a tire tread, the tire tread including one or more, or a plurality of variable-width sipes as described and contemplated herein. Another step includes operating the tire such that the opposing sipe sides substantially engage each other at substantially the same time in the closed configuration, which reduces rolling resistance of the tire.

The variable-width sipes described herein are characterized as having opposing sipe sides configured to substantially engage each other at substantially the same time when the variable-width sipe is in a closed configuration. For the opposing sides of the variable-width sipe to substantially engage each other at substantially the same time in a closed configuration, in an open configuration the variable-width sipe is characterized as having a variable width that decreases as the sipe depth increases into the tread thickness, such as from the ground-engaging side, for example. The variable width is defined by a pair of opposing sipe sides, which are spaced apart to form the variable width, where the width of the sipe extends transverse to both the sipe length and the sipe depth. In particular embodiments, the variable-width is configured articulate from an open, variable-width configuration to a closed configuration where the opposing sides of the sipe are substantially engaged along a substantial depth of the sipe when portions of the outer, ground-engaging side adjacent to the sipe are arranged in a generally flat configuration along a tire operating surface in the tire footprint. In such embodiments, the variable-width, in the open configuration, decreases as the depth of the sipe increases into the tread thickness in a direction from the outer, ground-engaging side. When the opposing sipe sides engage each other at substantially the same time, in particular embodiments, it can be said that no gap remains along the height of the sipe in substantial engagement in the closed configuration. As noted above, typically the variable-width sipe is arranged outside a tire footprint when in arranged in an open configuration, and within a tire footprint when in a closed configuration.

It is contemplated that each of the opposing sides may comprise any design, and extend along any path, so long as the opposing sides of the sipe are configured to substantially engage along a substantial depth of the sipe. For example, it is appreciated that variable width of the sipe may decrease linearly or at a constant rate as the depth increases into the tread thickness from the ground-engaging side in the open configuration. The opposing sides of the variable-width sipe may extend along a linear path or extend linearly as the depth increases into the tread thickness from the ground-engaging side for the substantial depth of the sipe in the open configuration. It is also contemplated that the opposing sides of the variable-width sipe may extend along a non-linear path, that is, non-linearly, as the depth increases into the tread thickness. The non-linear path of the variable-width may comprise any desired non-linear path, such as, a curvilinear path or an undulating path, for example. It is appreciated that each of the opposing sides may extend along any combination of paths through different portions of the tread thickness, including any combination of linear and non-linear paths.

With regard to the cross-sectional profile of the variable-width sipe in the open configuration, it is contemplated that the variable-width sipe may be symmetric about a radial centerline of the sipe measured from the actual intersection point of the opposing sides (where each terminate) at a particular depth within the tread thickness, or if not present, at a theoretical intersection of the opposing sides, where the extension of each of the opposing sides to a point where the extended opposing sides intersect. Alternatively, the cross-sectional profile of the variable-width sipe may be asymmetric about the radial centerline in the open configuration.

Each variable-width sipe also has a length extending transversely to the sipe depth and to the variable-width of the sipe. It is appreciated that the sipe length may extend in any direction of the tread and along any desired path, partially or fully across any portion of the tread. For example, the variable-width sipe may have a length which extends partially or fully across a tread element (such as a rib or block). By further example, the variable-width sipe length may extend along linear or non-linear paths, which may be curvilinear or undulating paths in particular instances. In particular embodiments, the sipes extend either partially or completely in a direction transverse to the tread length or, in other words, in a direction transverse to the rolling direction of the tire.

It is also contemplated that the variable-width sipe may arranged below, or offset from, the ground-engaging side of the tread, whereby a thickness of the tread is arranged between the ground-engaging side of the tread and the variable-width sipe. In such instances, the intent is for the variable-width sipe to become later exposed after thickness of tread has been worn or otherwise removed to expose the variable-width sipe. When this occurs, the variable-width sipe is extending into the tread thickness of the tread from the ground-engaging side, albeit the ground-engaging side in a worn condition. By doing so, a particular tire performance may be achieved at a worn stage of the tire's lifetime.

It is also contemplated that in particular instances, the variable-width sipe may arranged in fluid communication with one or more voids. In one example, a void is arranged at the bottom of a variable-width sipe. Such a void may comprise a submerged void. In another example, a void is arranged between the ground-engaging side and the variable-width sipe, such as when a variable-width sipe is arranged at the bottom of a void, such as a groove, to extend deeper into the tread thickness.

It is appreciated that any tread discussed herein may be arranged along a tire, or may be formed separately from a tire as a tire component for later installation on a tire carcass, in accordance with any technique or process known to one of ordinary skill in the art. For example, the treads discussed and referenced herein may be molded with a new, original tire, or may be formed as a retread for later installation upon a used tire carcass during retreading operations. Therefore, when referencing the tire tread, a longitudinal direction of the tire tread is synonymous with a circumferential direction of the tire when the tread is installed on a tire. Likewise, a direction of the tread width is synonymous with an axial direction of the tire or a direction of the tire width when the tread is installed on a tire. Finally, a direction of the tread thickness is synonymous with a radial direction of the tire when the tread is installed on a tire. It is understood that the inventive tread may be employed by any known tire, which may comprise a pneumatic or non-pneumatic tire, for example.

It is appreciated that any of the tread features discussed herein may be formed into a tire tread by any desired method. For example, the features may be molded into the tread during a molding operation, or may be cut into the tread after the tread has been molded or otherwise formed. In particular embodiments, such methods include a step of providing a mold having a molding cavity configured to mold a tire tread. The mold may comprise a tire mold, configured to receive a tire having a tire tread, or a tread mold, configured to forming a tread for later application to a tire carcass, such as in retreading operations, for example. In any event, the molding cavity of any such mold is configured to receive a variable-width sipe-forming element. The variable-width sipe-forming element is configured to form any variable-width sipe contemplated herein. It is appreciated that the variable-width sipe-forming element may be formed by any known process, and of any known material. For example, the sipe-forming element may comprise cast or microcast piece formed by a casting or microcasting process, respectively.

As already stated, the variable-width sipe-forming element may be arranged to achieve any of the variable-width sipes as contemplated herein. The variable-width sipe-forming element includes a variable-width which decreases as the height of the variable-width sipe-forming element increases further into the molding cavity, or, in other words, in a direction away from an outermost molding side of the molding cavity, which is configured to form the ground-engaging side of the tread. The variable-width sipe-forming element may optionally include a void-forming portion, such as for forming a submerged void below the variable-width sipe. It is appreciated that void-forming portion may form any desired void having any desired cross-sectional shape.

In particular embodiments, the variable-width sipe-forming element may also include one or more strengthening ridges extending in a direction of the element height. When a plurality of strengthening ridges are employed, the ridges are spaced apart along a length of the variable-width sipe-forming element. These ridges are employed for the purpose of strengthening the variable-width sipe-forming element to better resist and endure the stresses and strains encountered during repeated molding heat cycles and forceful demolding operations. It is appreciated that the ridges may comprise any desired shape.

Particular embodiments of the tires and methods discussed above will now be described in further detail below in association with the figures filed herewith exemplifying the performance of the methods in association with particular embodiments of the tires.

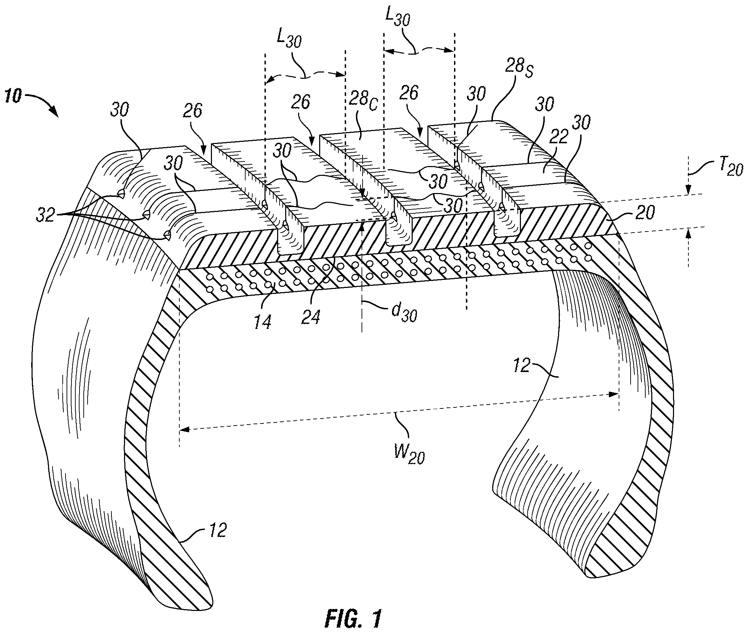

With reference to FIG. **1****,** a tire **10** according to an exemplary embodiment of the present invention is shown. The tire **10** is a pneumatic tire including a pair of sidewalls **12** each extending radially outward from a rotational axis of the tire to a central portion **14** of the tire **10.** The central portion **14** of the tire includes a tread **20** having a thickness **T₂₀** extending depthwise in a radial direction toward the rotational axis of the tire from a ground-engaging side **22** of the tread to a bottom side **24** for attachment and bonding to the tire. The tread also has a width **W₂₀** extending in a lateral direction between the pair of opposing, lateral sides or side edges **21** of the tread arranged adjacent sidewalls **12.** The tread also includes a pair of shoulders arranged along each side **21** extending along the tread thickness **T₂₀**.

With regard to the ground-engaging side **22** of the tread **20,** it is shown to include a plurality of voids **26** comprising longitudinal grooves having a length extending in a direction of the tread length, which is in a circumferential direction of the tire. Each void **26** comprising a longitudinal groove also has a depth **d₂₆** extending into the tread thickness **T₂₀** from the ground-engaging side **22.** The longitudinal grooves **26** define a plurality of tread elements comprising ribs also extending in a direction of the tread length. The plurality of ribs include both shoulder ribs **28_{S}** bounded by a lateral side **21** of the tread width **W₂₀** and a longitudinal groove **26** and center ribs **28_{C}** bounded on both sides by a pair of spaced apart longitudinal grooves **26.** While FIG. **1** illustrates a 4-rib tire, it is to be appreciated that the methods described herein can be utilized with tires having more or less ribs than tire **10.**

According to the exemplary embodiment shown in FIG. **1****,** the tread **20** includes a plurality of variable-width sipes **30.** Each sipe **30** extends into the tread thickness from the ground-engaging side **22** by a depth **d₃₀**. It is appreciated that the depth of each sipe **30** may extend into the thickness of the tread **20** by a depth equal to, less than, or greater than the depth of any groove **26.** Each sipe **30** also has a length **L₃₀** extending transversely to the tread thickness and the sipe depth. Certain sipes **30** are shown to have a length **L₃₀** extending fully across a tread element (which comprises a rib in the embodiment shown) from a first a groove **26** to a second groove **26** or to a lateral side **21** of the tread width **W₂₀**, while other sipes **30** are shown to have a length **L₃₀** extending partially across a tread element from a first a groove **26** and spaced apart from a second groove **26.** While the path of length **L₃₀** is shown to extend substantially 90 degrees relative to the (longitudinal) grooves **26,** it is appreciated that any such sipe **30** may extend at any angle from 0 and 90 and from 0 and -90 degrees relative any groove **26,** resulting in any such the sipe extending at least partially in a widthwise direction of the tire.

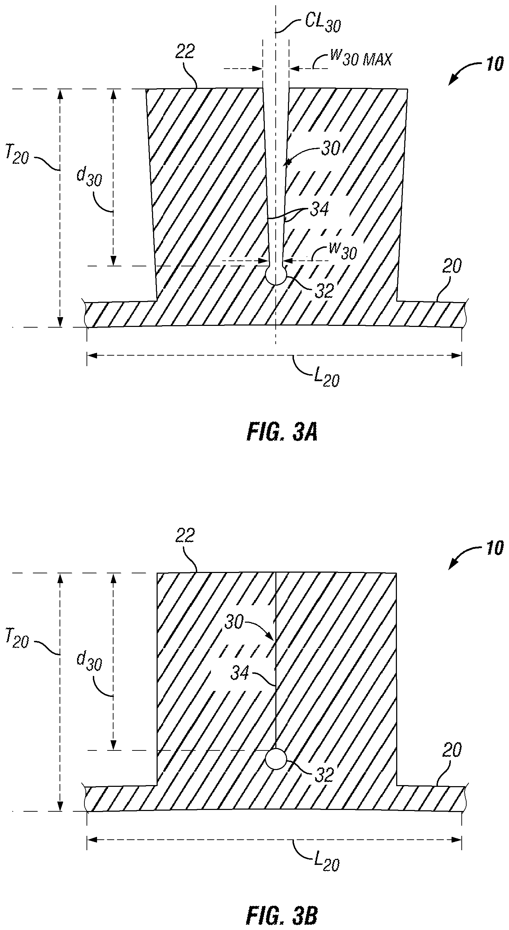

With reference to FIGS. **1** and **3A****,** sipe **30** includes a variable-width **w₃₀** extending transverse to the sipe length **L₃₀** and transverse to the sipe depth **d₃₀,** the variable-width being defined by a pair of opposing sipe sides **34,** and the variable-width decreasing as the depth increases into the tread thickness from the ground-engaging side. FIG. **3A** displays sipe **30** in the open configuration while FIG. **3B** shows sipe **30** in the closed configuration in the contact patch of the tire (i.e. in the footprint). In the closed configuration in FIG. **3B****,** opposing sipe sides **34** are configured to substantially engage each other at substantially the same time. The variable-width **w₃₀** includes a maximum width **w₃₀ₘₐₓ** between the opposing sides measured at the ground-engaging side as seen in FIG. **3A****.** In one embodiment, the maximum width **w₃₀ₘₐₓ** is equal to or less than 0.5 mm, or 0.4 mm.

In the embodiment shown in FIG. **3A****,** the variable-width **w₃₀** of sipe 30 decreases linearly in the open configuration. In other words, the variable-width **w₃₀** decreases at a constant rate as the depth increases into the tread thickness from the ground-engaging side. This is contrary to FIG. **2A** which displays a sipe in the open configuration according to the prior art having a width which remains constant as the sipe depth increases into the tread thickness from the ground-engaging side. Similarly, FIG. **2B** shows the sipe of FIG. **2A** in the closed configuration in the contact patch of the tire according to the prior art, where opposing sipe sides **34** do not substantially engage each other at substantially the same time. This uneven or non-uniform engagement of opposing sipe sides **34** creates non-uniform pressure along the radial axis of the sipe in FIG. **2B** which increases rolling resistance and wear of the tire.

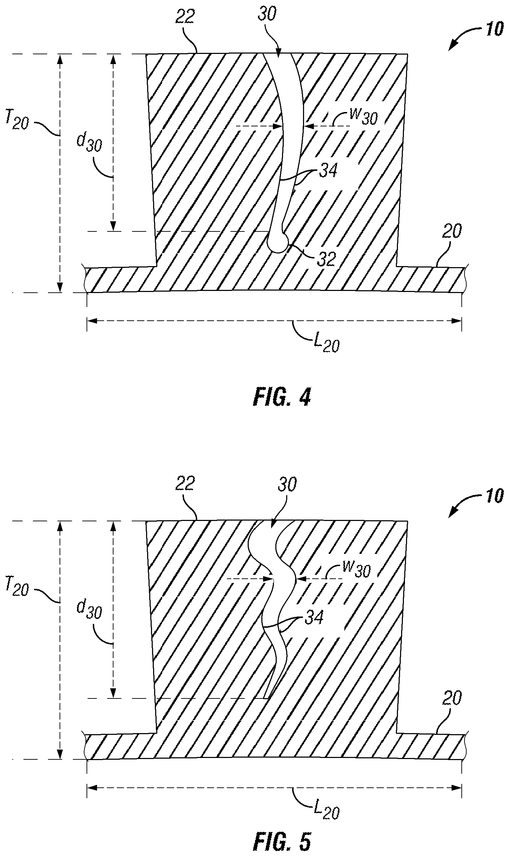

With continuing reference to FIG. **3A****,** each of the opposing sides **34** of the sipe **30** extend along a linear path for the substantial depth of the sipe in the open configuration. Stated another way, each of opposing sides **34** extend linearly as the depth increases into the tread thickness from the ground-engaging side for the substantial depth of the sipe in the open configuration. FIG. **3A** also shows sipe **30** having a radial centerline **cl₃₀** measured from the termination of sipe **30** in the tread radially outward to the ground-engaging side. In FIG. **3A****,** the sipe **30** in the open configuration is symmetric about the radial centerline **cl₃₀** of the sipe. In an alternative embodiment, the sipe **30** in the open configuration is asymmetric about the radial centerline **cl₃₀** of the sipe as seen in FIG. **4** which is discussed more fully below.

FIG. **4** displays yet another embodiment of sipe **30** where each of the opposing sides **34** extend along a curvilinear non-linear path for the substantial depth of the sipe from the ground-engaging side in the open configuration. In other words, each of opposing sides **34** extend non-linearly as the depth increases into the tread thickness from the ground-engaging side for the substantial depth of the sipe. As noted above, the sipe **30** of FIG. **4** in the open configuration is asymmetric about the radial centerline **cl₃₀** of the sipe.

In still another embodiment of sipe **30,** the non-linear path of the variable-width is an undulating path as shown in FIG. **5****.** In such an embodiment, opposing sides **34** undulate as the depth increases into the tread thickness from the ground-engaging side for the substantial depth of the sipe. As opposing sides **34** undulate, the variable-width decreases as the depth increases.

In the embodiment shown in FIG. **1****,** the sipes **30** arranged along the center ribs **28_{C}** have lengths **L₃₀** extending along non-linear, undulating paths. The sipes **30** also extend at least partially in a direction transverse to the tread length, or, in other words, in a rolling direction of the tire. The rolling direction of the tire is the direction the tire moves along the tire operating surface during tire operation. The sipes **30** arranged along the shoulder ribs **28_{S}** have lengths **L₃₀** extending along linear paths. While FIG. **1** depicts sipes in the shoulder tread elements having lengths extending along linear paths, it is appreciated that the length of such sipes can extend along non-linear paths, which may or may not be undulating paths. Similarly, sipes arranged along the center ribs **28_{C}** can have lengths **L₃₀** extending along linear paths. The length of the sipes may extend fully or partially across the center ribs and the shoulder ribs.

In particular embodiments, such in the embodiment shown in FIG. 1, each sipe **30** extends toward the ground-engaging side **22** from a submerged void **32** offset or spaced below the ground-engaging side within the tread thickness. In other words, each sipe **30** extends into the thickness of the tread **20** from the ground-engaging side and into a submerged void **32.** The submerged void **32** may comprise any desired void having any cross-sectional shape of any desired size.

A comparison of a variable-width sipe according to the present invention with a constant width sipe according the prior art was done to determine the differences in sipe contact pressure during the contact patch or footprint. The prior art sipe tested included a constant width of 0.4 mm along the depth of the sipe. The variable-width sipe tested according the present invention included a 0.4 mm width measured at the ground-engaging side of the tread which decreased or tapered to 0.2 mm width at the termination of the sipe in the tread. During the contact patch or the footprint of the sipe according to the prior art, non-uniform pressure was distributed along the radial axis of this sipe. FIGS. **2A** and **2B** are representative of the constant width sipe according to the prior art. FIG. **2A** displays the constant width sipe in the open configuration or non-contact patch and FIG. **2B** shows the constant width sipe in the closed configuration or contact patch. In FIG. **2B****,** it is shown that the opposing walls of the constant width sipe do not contact each other at the same time which creates non-uniform pressure along the radial axis of the sipe. To the contrary, the variable-width sipe according the present invention displayed uniform pressure along the radial axis of the sipe as seen in FIGS. **3A** and **3B.** FIG. **3A** shows the variable-width sipe in the open configuration or non-contact patch while FIG. **3B** displays the variable-width sipe in the closed configuration or contact patch of the tire. It is seen in FIG. **3B** that opposing sides **34** of sipe **30** contact each other at the same time which creates uniform pressure along the radial axis of the sipe. As noted above, the uniform pressure along the radial axis of the sipe minimizes the block deformation of the tire.

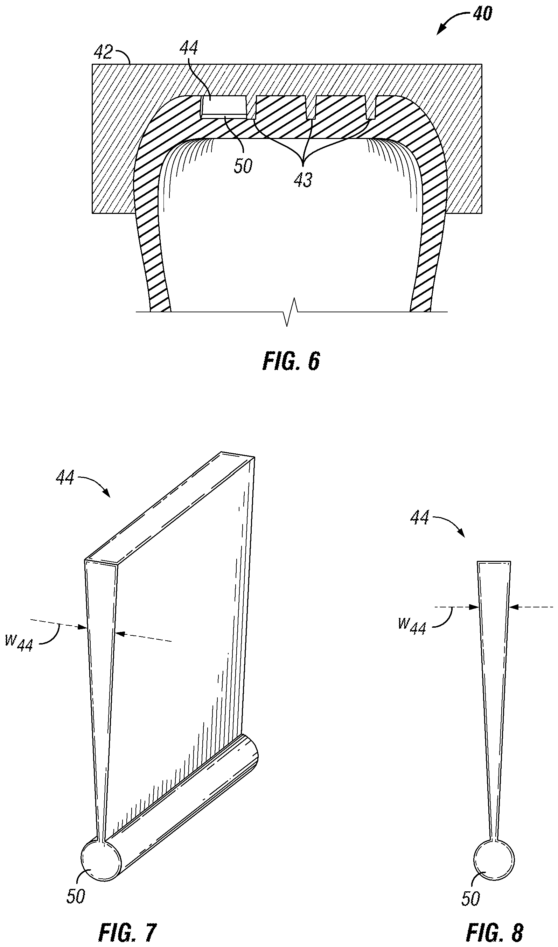

As stated above, any tread discussed herein having variable-width sipes may be formed independently for subsequent bonding to form a retreaded tire carcass, or may be molded and cured with a tire belt or the like to form a new tire. In an exemplary embodiment shown in FIG. **6****,** a variable-width sipe **30** is formed in a tread using a mold **40.** Specifically, the mold **40** includes an outermost molding side or surface **42** from which groove-forming elements **43** extend into a molding cavity. The groove-forming elements **43** are configured to form grooves, such as the grooves **26** of FIG. **1****.** The mold **40** further includes a variable-width sipe-forming element **44** which may be used to form one or more of variable-width sipes **30** in a tread **20,** and any variable-width sipes contemplated herein.

As shown in FIGS. 7 and **8****,** variable-width sipe-forming element **44** may be used to form one or more variable-width sipes **30** as discussed above. The variable-width sipe-forming element **44** may be arranged to achieve any of the variable-width sipes **30** as contemplated above. As discussed above, the variable-width sipe-forming element **44** may optionally include a submerged void-forming portion extending in a direction away from the outermost molding surface or outer side of the molding cavity. In the exemplary embodiment shown in FIGS. 7 and **8****,** the variable-width sipe-forming element **40** includes a void-forming portion **50** configured to form a submerged void, or more specifically, a teardrop-shaped submerged void.

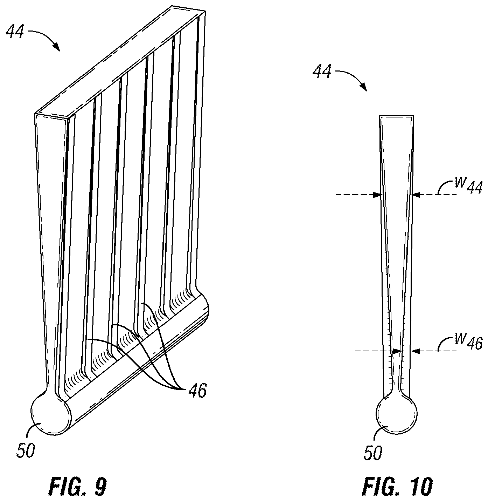

In another embodiment shown in FIGS. **9** and **10****,** the variable-width sipe-forming element **44** is tapered with ridges **46** spaced apart from each other along the length of the variable-width sipe-forming element. The variable-width sipe-forming element **44** includes a variable-width **w₄₄.** The ridges **46** include a width **w₄₆.** It is contemplated that the width **w₄₆** of the ridges may be constant or variable along the length and depth or height of the variable-width sipe forming element **44.** The ridges **46** strengthen the variable-width sipe forming element **44** to combat the repeated stresses and strains encountered during molding and demolding operations. In the exemplary embodiment shown in FIGS. **9** and **10****,** the variable-width sipe-forming element **44** includes a void-forming portion **50** used to form a submerged void in the present embodiment.

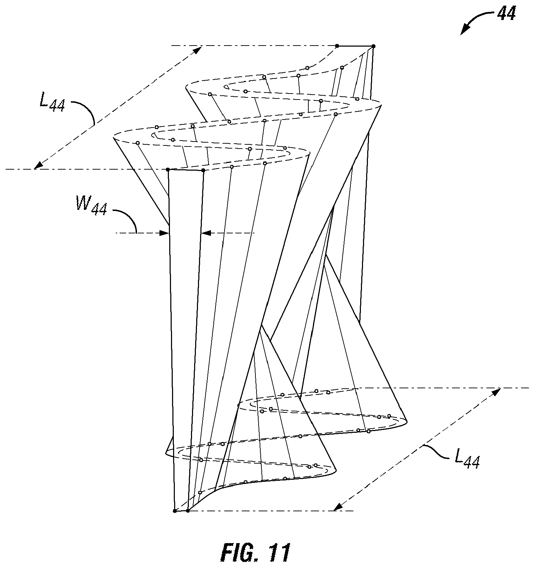

In another embodiment, with reference to FIG. **11****,** a variable-width sipe-forming element **44** is shown, where the element has a variable width **w₄₄** and extends along an undulating non-linear path in a direction of the element length **L₄₄** and along a linear path in a direction of the variable-width forming element height. By providing undulating features, the sipe-forming element is strengthened, similarly to providing the strengthening ridges.

The terms "comprising," "including," and "having," as used in the claims and specification herein, shall be considered as indicating an open group that may include other elements not specified. The terms "a," "an," and the singular forms of words shall be taken to include the plural form of the same words, such that the terms mean that one or more of something is provided. The terms "at least one" and "one or more" are used interchangeably. The term "single" shall be used to indicate that one and only one of something is intended. Similarly, other specific integer values, such as "two," are used when a specific number of things is intended. The terms "preferably," "preferred," "prefer," "optionally," "may," and similar terms are used to indicate that an item, condition or step being referred to is an optional (*i*.*e*., not required) feature of the invention. Ranges that are described as being "between a and b" are inclusive of the values for "a" and "b" unless otherwise specified.

While this invention has been described with reference to particular embodiments thereof, it shall be understood that such description is by way of illustration only and should not be construed as limiting the scope of the claimed invention. Accordingly, the scope and content of the invention are to be defined only by the terms of the following claims. Furthermore, it is understood that the features of any specific embodiment discussed herein may be combined with one or more features of any one or more embodiments otherwise discussed or contemplated herein unless otherwise stated.

## Claims

1. A tire tread (20), comprising:
a thickness (T20) extending depthwise from an outer, ground-engaging side (22) of the tread (20) in a direction perpendicular to a direction of a tread width and in a direction of a tread length; and
a sipe (30) arranged within the tread (20), the sipe (30) having a length (L30) extending in a direction transverse to the tread thickness (T20), and a depth (d30) extending into the tread thicknesss (T20) in a direction away from the outer, ground-engaging side (22), the sipe (30) configured to articulate between an open configuration and a closed configuration as a tire (10) rotates during tire operation, where the sipe (30) has a variable-width (W30) extending transverse to the sipe length (L30) and transverse to the sipe depth in the open configuration, the variable-width (W30) being defined by a pair of opposing sipe sides (34), the variable-width (W30) decreasing as the sipe depth increases into the tread thickness (T20) in a direction away from the outer, ground-engaging side,
**characterized in that** the opposing sipe sides are configured to substantially engage each other along the length (L30) of the sipe (30) at substantially the same time in the closed configuration.

2. The tire tread (20) according to claim 1, where the variable-width (W30) decreases linearly in the open configuration.

3. The tire tread (20) according to claim 1 or 2, where each of the opposing sides extends along a non-linear path for the substantial depth of the sipe (30).

4. The tire tread (20) according to claim 1, 2 or 3, where a submerged void is arranged below the sipe (30), such that the sipe (30) is arranged between the outer, ground-engaging side (22) of the tread (20) and the submerged void.

5. The tire tread (20) according to claim 1, 2, 3 or 4, where a void is arranged above the sipe (30), such that the void is arranged between the outer, ground-engaging side (22) of the tread (20) and the sipe (30) .

6. The tire tread (20) according to claim 1, 2, 3, 4 or 5, where the sipe length (L30) extends at least partially in the direction of the tread width.

7. The tire tread (20) according to claim 1, 2, 3, 4, 5 or 6, where the length (L30) of the sipe (30) extends along a non-linear path.

8. The tire tread (20) according to claim 1, 2, 3, 4, 5, 6 or 7, where a maximum width of the variable-width (W30) in the open configuration is equal to or less than 0.4 mm.

9. The tire tread (20) according to claim 1, 2, 3, 4, 5, 6, 7 or 8, where the tire tread (20) forms a portion of the tire.

10. A method of reducing rolling resistance of a tire (10) during tire operation, comprising:
providing a tire (10), the tire having a tire tread (20) with a thickness (T20) extending depthwise from an outer, ground-engaging side (22) of the tread (20) in a direction perpendicular to a direction of a tread width and in a direction of a tread length, the direction of the tread thickness (T20) extending in a radial direction of the tire relative a rotational axis of the tire;
providing a sipe (30) arranged within the tread (20), the sipe (30) having a length (L30) extending in a direction transverse to the tread thickness (T20), and a depth extending into the tread thickness (T20) in a direction away from the outer, ground-engaging side, the sipe (30) configured to articulate between an open configuration and a closed configuration as the tire rotates during tire operation, where the sipe (30) has a variable-width (W30) extending transverse to the sipe length (L30) and transverse to the sipe depth in the open configuration, the variable-width (W30) being defined by a pair of opposing sipe sides, the variable-width (W30) decreasing as the sipe depth increases into the tread thickness (T20) in a direction away from the outer, ground-engaging side,
where the opposing sipe sides are configured to substantially engage each other along the length (L30) of the sipe (30) at substantially the same time in the closed configuration.

11. The method according to claim 10 further comprising operating the tire (10) such that the opposing sipe (30) sides substantially engage each other at substantially the same time in the closed configuration.

12. The method according to claim 10 or 11, where each of the opposing sides extends along a non-linear path for the substantial depth of the sipe (30).

13. The method according to any one of claims 10 to 12, where the sipe (30) in the open configuration is asymmetric about a radial centerline (CL) of the sipe (30).

14. The method according to any one of claims 10 to 13, where a maximum width of the variable-width (W30) in the open configuration is equal to or less than 0.4 mm.

15. The method according to any one of claims 10 to 14, where the sipe length (L30) extends at least partially in a direction transverse to a rolling direction of the tire (10).

## Patentansprüche

1. Reifenlauffläche (20), umfassend:
eine Dicke (T20), die sich in die Tiefe von einer äußeren, bodenberührenden Seite (22) des Reifens (20) in einer Richtung senkrecht zu einer Richtung einer Laufflächenbreite und in einer Richtung einer Laufflächenlänge erstreckt; und
einen Einschnitt (30), der in der Lauffläche (20) angeordnet ist, wobei der Einschnitt (30) eine Länge (L30) hat, die sich in einer Richtung quer zur Laufflächendicke (T20) erstreckt, und eine Tiefe (d30), die sich in die Laufflächendicke (T20) in einer Richtung weg von der äußeren, bodenberührenden Seite (22) erstreckt, wobei der Einschnitt (30) dafür ausgelegt ist, sich gelenkig zwischen einer offenen Konfiguration und einer geschlossenen Konfiguration zu bewegen, wenn ein Reifen (10) während der Reifennutzung rotiert, wobei der Einschnitt (30) eine variable Breite (W30) hat, die sich quer zur Einschnittlänge (L30) und quer zur Einschnitttiefe in der offenen Konfiguration erstreckt, wobei die variable Breite (W30) durch ein Paar von gegenüberliegenden Einschnittseiten (34) festgelegt wird, wobei die variable Breite (W30) sich verringert, wenn sich die Einschnitttiefe in die Laufflächendicke (T20) in einer Richtung weg von der äußeren, Boden berührenden Seite erhöht,
**dadurch gekennzeichnet, dass**
die gegenüberliegenden Einschnittseiten dafür ausgelegt sind, im Wesentlichen ineinander entlang der Länge (L30) des Einschnitts (30) zur im Wesentlichen gleichen Zeit in der geschlossenen Konfiguration einzugreifen.

2. Reifenlauffläche (20) nach Anspruch 1, wobei die variable Breite (W30) sich linear in der offenen Konfiguration verringert.

3. Reifenlauffläche (20) nach Anspruch 1 oder 2, wobei sich jede der gegenüberliegenden Seiten entlang eines nicht-linearen Pfades für die substantielle Tiefe des Einschnitts (30) erstreckt.

4. Reifenlauffläche (20) nach Anspruch 1, 2 oder 3, wobei ein versenkter Hohlraum unterhalb des Einschnitts (30) derart angeordnet ist, dass der Einschnitt (30) zwischen der äußeren, Boden berührenden Seite (22) der Lauffläche (20) und dem versenkten Hohlraum angeordnet ist.

5. Reifenlauffläche (20) nach Anspruch 1, 2, 3 oder 4, wobei ein Hohlraum oberhalb des Einschnitts (30) derart angeordnet ist, dass der Hohlraum zwischen der äußeren, Boden berührenden Seite (22) der Lauffläche (20) und dem Einschnitt (30) angeordnet ist.

6. Reifenlauffläche (20) nach Anspruch 1, 2, 3, 4 oder 5, wobei die Einschnittlänge (L30) sich zumindest teilweise in der Richtung der Laufflächenbreite erstreckt.

7. Reifenlauffläche (20) nach Anspruch 1, 2, 3, 4, 5 oder 6, wobei die Länge (L30) des Einschnitts (30) sich entlang eines nicht-linearen Pfades erstreckt.

8. Reifenlauffläche (20) nach Anspruch 1, 2, 3, 4, 5, 6 oder 7, wobei eine maximale Breite der variablen Breite (W30) in der offenen Konfiguration kleiner oder gleich 0,4 mm ist.

9. Reifenlauffläche (20) nach Anspruch 1, 2, 3, 4, 5, 6, 7 oder 8, wobei die Reifenlauffläche (20) einen Teil des Reifens bildet.

10. Verfahren zum Reduzieren des Rollwiderstandes eines Reifens (10) während des Einsatzes, umfassend:
Bereitstellen eines Reifens (10), wobei der Reifen eine Reifenlauffläche (20) mit einer Dicke (T20) hat, die sich in die Tiefe von einer äußeren, Boden berührenden Seite (22) der Lauffläche (20) in einer Richtung senkrecht zu einer Richtung einer Laufflächenbreite und in einer Richtung einer Laufflächenlänge erstreckt, wobei sich die Richtung der Laufflächendicke (T20) in einer radialen Richtung des Reifens relativ zu einer Rotationsachse des Reifens erstreckt;
Bereitstellen eines Einschnitts (30), der innerhalb der Lauffläche (20) angeordnet ist, wobei der Einschnitt (30) eine Länge (L30) hat, die sich in einer Richtung quer zur Laufflächendicke (T20) erstreckt, und eine Tiefe, die sich in die Laufflächendicke (T20) in einer Richtung weg von der äußeren, Boden berührenden Seite erstreckt, wobei der Einschnitt (30) dafür ausgelegt ist, sich gelenkig zwischen einer offenen Konfiguration und einer geschlossenen Konfiguration zu bewegen, wenn der Reifen während des Reifeneinsatzes rotiert, wobei der Einschnitt (30) eine variable Breite (W30) hat, die sich quer zur Einschnittlänge (L30) und quer zur Einschnitttiefe in der offenen Konfiguration erstreckt, wobei die variable Breite (W30) durch ein Paar von gegenüberliegenden Einschnittseiten festgelegt wird, wobei die variable Breite (W30) sich verringert, wenn sich die Einschnitttiefe in die Laufflächendicke (T20) in einer Richtung weg von der äußeren, Boden berührenden Seite verringert,
wobei die gegenüberliegenden Einschnittseiten dafür ausgelegt sind, im Wesentlichen ineinander entlang der Länge (L30) des Einschnitts (30) zu im Wesentlichen derselben Zeit in der geschlossenen Konfiguration in Eingriff zu kommen.

11. Verfahren nach Anspruch 10, das ferner das Einsetzen des Reifens (10) derart umfasst, dass die gegenüberliegenden Seiten des Einschnitts (30) im Wesentlichen ineinander zu im Wesentlichen derselben Zeit in der geschlossenen Konfiguration greifen.

12. Verfahren nach Anspruch 10 oder 11, wobei jede der gegenüberliegenden Seiten sich entlang eines nicht-linearen Pfades für die wesentliche Tiefe des Einschnitts (30) erstreckt.

13. Verfahren nach einem der Ansprüche 10 bis 12, wobei der Einschnitt (30) in der offenen Konfiguration asymmetrisch zu einer radialen Mittellinie (CL) des Einschnitts (30) ist.

14. Verfahren nach einem der Ansprüche 10 bis 13, wobei eine maximale Breite der variablen Breite (W30) in der offenen Konfiguration kleiner oder gleich 0,4 mm ist.

15. Verfahren nach einem der Ansprüche 10 bis 14, wobei sich die Einschnittlänge (L30) zumindest teilweise in einer Richtung quer zu einer Rollrichtung des Reifens (10) erstreckt.

## Revendications

1. Bande de roulement (20) de pneu, comprenant :
une épaisseur (T20), s'étendant en profondeur depuis un côté de mise en prise avec le sol, extérieur (22), de la bande de roulement (20), dans une direction perpendiculaire à une direction d'une largeur de bande de roulement et dans une direction de longueur de bande de roulement et
une lamelle (30), agencée dans la bande de roulement (20), la lamelle (30) ayant une longueur (L30), qui s'étend dans une direction transversale à l'épaisseur (T20) de la bande de roulement et une profondeur (d30), qui s'étend dans l'épaisseur (T20) de la bande de roulement, dans une direction éloignée du côté de mise en prise avec le sol, extérieur (22), la lamelle (30) étant configurée pour s'articuler entre une configuration ouverte et une configuration fermée, lorsqu'un un pneu (10) tourne pendant le fonctionnement du pneu, où la lamelle (30) a une largeur variable (W30) qui s'étend transversalement par rapport à la longueur (L30) de la lamelle et transversalement par rapport à la profondeur de la lamelle dans la configuration ouverte, la largeur variable (W30) étant définie par une paire de côtés opposés (34) de la lamelle, la largeur variable (W30) diminuant au fur et à mesure qu'augmente la profondeur de la lamelle dans l'épaisseur (T20) de la bande de roulement, dans une direction éloignée du côté de mise en prise avec le sol, extérieur,
**caractérisée en ce que**
les côtés opposés de la lamelle sont configurés pour se mettre en prise sensiblement entre eux sur la longueur (L30) de la lamelle (30), sensiblement au même moment, dans la configuration fermée.

2. Bande de roulement (20) de pneu selon la revendication 1, où la largeur variable (W30) diminue de manière linéaire dans la configuration ouverte.

3. Bande de roulement (20) de pneu selon la revendication 1 ou 2, où chacun des côtés opposés s'étend le long d'une trajectoire non linéaire pour la grande profondeur de la lamelle (30).

4. Bande de roulement (20) de pneu selon la revendication 1, 2 ou 3, où un vide immergé est agencé sous la lamelle (30), de sorte que la lamelle (30) est agencée entre le côté de mise en prise avec le sol, extérieur (22), de la bande de roulement (20) et le vide immergé.

5. Bande de roulement (20) de pneu selon la revendication 1, 2, 3 ou 4, où un vide est agencé au-dessus de la lamelle (30), de sorte que le vide est agencé entre le côté de mise en prise avec le sol, extérieur (22), de la bande de roulement (20) et la lamelle (30).

6. Bande de roulement (20) de pneu selon la revendication 1, 2, 3, 4 ou 5, où la longueur (L30) de la lamelle s'étend au moins partiellement dans la direction de la largeur de la bande de roulement.

7. Bande de roulement (20) de pneu selon la revendication 1, 2, 3, 4, 5 ou 6, où la longueur (L30) de la lamelle (30) s'étend le long d'une trajectoire non linéaire.

8. Bande de roulement (20) de pneu selon la revendication 1, 2, 3, 4, 5, 6 ou 7, où une largeur maximale de la largeur variable (W30) est inférieure ou égale, dans la configuration ouverte, à 0,4 mm.

9. Bande de roulement (20) de pneu selon la revendication 1, 2, 3, 4, 5, 6, 7 ou 8, où la bande de roulement (20) de pneu forme une partie du pneu.

10. Procédé de réduction de la résistance au roulement d'un pneu (10) pendant le fonctionnement d'un pneu, comprenant les opérations, consistant à :
prévoir un pneu (10), le pneu ayant une bande de roulement (20) de pneu, avec une épaisseur (T20), s'étendant en profondeur depuis un côté de mise en prise avec le sol, extérieur (22), de la bande de roulement (20), dans une direction perpendiculaire à une direction d'une largeur de bande de roulement et dans une direction de longueur de bande de roulement, la direction de l'épaisseur (T20) de la bande de roulement s'étendant dans une direction radiale du pneu par rapport à un axe de rotation du pneu ;
prévoir une lamelle (30), agencée dans la bande de roulement (20), la lamelle (30) ayant une longueur (L30), qui s'étend dans une direction transversale à l'épaisseur (T20) de la bande de roulement et une profondeur qui s'étend dans l'épaisseur (T20) de la bande de roulement, dans une direction éloignée du côté de mise en prise avec le sol, extérieur, la lamelle (30) étant configurée pour s'articuler entre une configuration ouverte et une configuration fermée, lorsqu'un le pneu tourne pendant le fonctionnement du pneu, où la lamelle (30) a une largeur variable (W30) qui s'étend transversalement par rapport à la longueur (L30) de la lamelle et transversalement par rapport à la profondeur de la lamelle dans la configuration ouverte, la largeur variable (W30) étant définie par une paire de côtés opposés de la lamelle, la largeur variable (W30) diminuant au fur et à mesure qu'augmente la profondeur de la lamelle dans l'épaisseur (T20) de la bande de roulement, dans une direction éloignée du côté de mise en prise avec le sol, extérieur,
où les côtés opposés de la lamelle sont configurés pour se mettre en prise sensiblement les uns avec les autres, le long de la longueur (L30) de la lamelle (30), sensiblement au même moment, dans la configuration fermée.

11. Procédé selon la revendication 10, comprenant en outre l'opération, consistant à faire fonctionner le pneu (10), de sorte que les côtés opposés de la lamelle (30) se mettent en prise sensiblement les uns avec les autres, sensiblement au même moment, dans la configuration fermée.

12. Procédé selon la revendication 10 ou 11, où chacun des côtés opposés s'étend le long d'une trajectoire non linéaire pour la grande profondeur de la lamelle (30).

13. Procédé selon l'une quelconque des revendications 10 à 12, où la lamelle (30) est asymétrique, dans la configuration ouverte, autour d'une ligne centrale radiale (CL) de la lamelle (30).

14. Procédé selon l'une quelconque des revendications 10 à 13, où une largeur maximale de la largeur variable (W30) est inférieure ou égale, dans la configuration ouverte, à 0,4 mm.

15. Procédé selon l'une quelconque des revendications 10 à 14, où la longueur (L30) de la lamelle s'étend au moins partiellement dans une direction transversale à une direction de roulement du pneu (10).
